Europäisches Patentamt

European Patent Office

Office européen des brevets

(11) Veröffentlichungsnummer : **0 059 160
B1**

(12) **EUROPÄISCHE PATENTSCHRIFT**

(45) Veröffentlichungstag der Patentschrift :
20.08.86

(51) Int. Cl.⁴ : **G 01 G 15/00, F 16 L 27/10,
G 01 G 21/30**

(21) Anmeldenummer : **82810045.3**

(22) Anmeldetag : **04.02.82**

(54) **Zum Aufstellen auf eine Waage bestimmter, im wesentlichen geschlossener Behälter mit einem zur Zuleitung von Schutzgas dienenden, ins Behälterinnere mündenden Druckgasanschluss.**

(30) Priorität : **23.02.81 CH 1174/81**

(43) Veröffentlichungstag der Anmeldung :
**01.09.82 Patentblatt 82/35**

(45) Bekanntmachung des Hinweises auf die Patenterteilung : **20.08.86 Patentblatt 86/34**

(84) Benannte Vertragsstaaten :
**AT DE FR GB IT NL**

(56) Entgegenhaltungen :
**DE-A- 2 628 594**

(73) Patentinhaber : **K-TRON SODER AG
Mühlestrasse 96
CH-5702 Niederlenz (CH)**

(72) Erfinder : **Klein, Karl-Heinz
Badenbenderstrasse 35
Gelnhausen 2 (Hailer) (DE)**

(74) Vertreter : **Eder, Carl E. et al
Patentanwaltsbüro EDER AG Münchensteinerstrasse
2
CH-4052 Basel (CH)**

## Beschreibung

Die vorliegende Erfindung betrifft einen zum Aufstellen auf eine Waage bestimmten, im wesentlichen geschlossenen Behälter mit einem zur Zuleitung von Schutzgas dienenden, ins Behälterinnere mündenden Druckgasanschluss. Bei Behälterinnere mündenden Druckgasanschluss. Bei Behältern dieser Art besteht an sich meist das Bedürfnis, den Druckgasanschluss mit der Behälterwand beweglich zu verbinden, damit er mit dem Druckgasnetz starr verbunden sein kann. Dies führt besonders dann zu Schwierigkeiten, wenn der Behälter mit einer Auslauföffnung oder sogar mit einem kontinuierlich arbeitenden Austragmechanismus, beispielsweise einer Förderschnecke versehen ist, weil durch den durch das Schutzgas verursachten Überdruck Reaktionskräfte auftreten, die die Wägung stören und im Falle von Folgerechnern auch auf die Resultate dieses Rechners und die von diesen erzeugten Wirkungen einen störenden Einfluss ausüben.Dies ist z. B. dann der Fall, wenn, wie das heute üblich ist, der Druckgasanschluss mit dem Behälter durch eine frei bewegliche Manschette verbunden ist, d. h. durch eine Manschette aus weichem Material, das auch dann keine Kraft zwischen den durch sie verbundenen Teil überträgt, wenn sich die beiden gegeneinander bewegen. Zur Vermeidung von störenden Einflüssen weist nun beim erfindungsgemässen Behälter der Druckgasanschluss an seiner Mündung ein vertikales Rohrstück auf, in welches die Druckgaszuleitung seitlich starr eingesetzt ist, wobei die beiden Rohrenden je mittels einer flexiblen Manschette kraftübertragungsfrei direkt mit dem Behälter verbunden sind und zwar das untere Rohrende mit dem Behälterdeckel, in den es mündet, und das obere Rohrende mit einem mit dem Behälterdeckel starr verbundenen, den Manschettenquerschnitt abschliessenden Abschlussorgan. Weitere besondere Massnahmen sind in den Ansprüchen 2 und 3 angegeben.

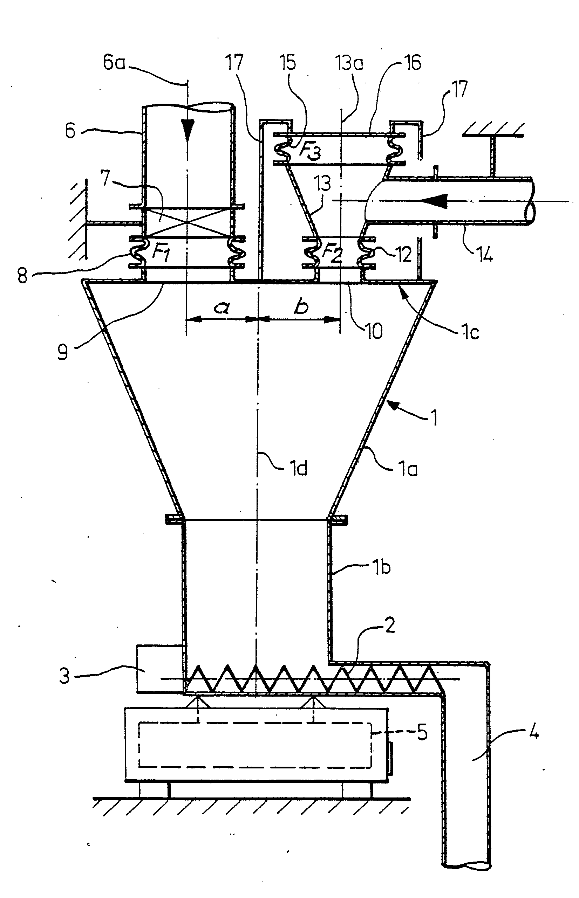

Nachfolgend wird anhand der beiliegenden Zeichnung ein Ausführungsbeispiel der Erfindung beschrieben. Die einzige Figur zeigt stark schematisiert einen auf einer Waagebrücke stehenden erfindungsgemässen Behälter.

Der als Ganzes mit 1 bezeichnete Behälter weist einen oberen, mit 1a bezeichneten, sich nach oben trichterförmig erweiternden Abschnitt und einen unteren, mit 1b bezeichneten Abschnitt auf, in welchem sich zuunterst eine Förderschnecke 2 befindet, deren Antriebsaggregat rein schematisch mit 3 bezeichnet ist. Die Förderschnecke 2 fördert den Inhalt zu einen Auslaufrohr 4. Der Behälter 1 steht auf der Brücke 5 einer Waage, die an sich jede beliebige Konstruktion aufweisen kann, wobei für eine automatische Auslaufsteuerung natürlich solche Waagen verwendet werden, an welche sich ohne grossen apparativen Aufwand ein Rechner anschliessen lässt. Zum Füllen des Behälters 1 dient das ortsfeste Materialzuleitungsrohr 6, das durch einen Schieber 7 abschliessbar ist und dessen Mündung durch eine flexible Manschette 8 mit der Einfüllöffnung 9 des Behälters 1 dicht verbunden ist. Die Manschette 8 besteht, wie das an sich bekannt ist, aus einem weichen Material, das auch dann, wenn sich der Behälter 1 gegenüber dem Zuleitungsrohr 6 bewegt, keine Kräfte von einem Teil auf den andern überträgt. Der Behälter 1 bzw. sein Deckel 1c weist des weiteren eine Öffnung 10 auf, die zum Entlüften und für den Zustrom von Schutzgas dient. Diese Öffnung ist über die bewegliche Manschette 12· mit dem unteren Ende eines vertikalen — hier konischen — Rohrstückes 13 verbunden, in welches die ortsfeste Druckgas- und Entlüftungsleitung 14 seitlich starr eingesetzt ist. Das obere Ende dieses vertikalen Rohrstückes 13 ist durch die flexible Manschette 15 mit einem Abschlussorgan 16 dicht abgeschlossen, das über Träger 17 mit dem Behälterdeckel 1c starr verbunden ist.

Es sind die Querschnittsfläche $F_1$ des Rohrseitigen Endes der Manschette 8, die Querschnittsfläche $F_2$ des Behälter-seitigen Endes der Manschette 12 und die Querschnittsfläche $F_3$ des Abschlussorgan-seitigen Endes der Manschette 15 so bemessen, dass $F_1 + F_2 = F_3$.

Die Achse 6a des Zuleitungsrohres 6, die Achse 13a des vertikalen, hier konischen Rohrstückes 13 und die Vertikale 1d durch den Behälterschwerpunkt liegen in einer Ebene.

Falls der Behälter nicht mit einem Materialzuleitungsrohr 6 ausgerüstet ist, ist natürlich $F_2 = F_3$ und in diesem Fall ist die Anordnung so zu treffen, dass die Achse 13a des Rohrstückes 13 mit der Vertikalen 1d durch den Behälterschwerpunkt zusammenfällt.

Mit einer solchen Ausgestaltung des Druckgasanschlusses verursachen weder unterschiedliche Drucke im Druckgasnetz noch das Einströmen des Schutzgases Störungen der Messwerte.

## Patentansprüche

1. Zum Aufstellen auf eine Waage bestimmter, im wesentlichen geschlossener Behälter (1) mit einem zur Zuleitung von Schutzgas dienenden, ins Behälterinnere mündenden Druckgasanschluss (13, 14), wobei zur Ermöglichung einer starren Verbindung zwischen dem Druckgasanschluss (13, 14) und dem Druckgasnetz die Mündung des Druckgasanschlusses mit der Behälterwandung beweglich verbunden ist, dadurch gekennzeichnet, dass der Druckgasanschluss an seiner Mündung ein vertikales Rohrstück (13) aufweist, in welches die Druckgaszuleitung (14) seitlich starr eingesetzt ist, wobei die beiden Rohrenden je mittels einer flexiblen Manschette (12, 15) kraftübertragungsfrei direkt mit dem Behälter (1) verbunden sind, und zwar das untere Rohrende mit dem Behälterdeckel (1c), in den es mündet, und das obere Rohrende mit einem mit dem Behälterdeckel starr verbundenen, den Manschettenquerschnitt abschliessenden Abschlussorgan (16).

2. Behälter nach Anspruch 1, daßer über eine Manschette (8) mit einem abschliessbaren Materialzuleitungsrohr (6) verbunden ist, wobei die Querschnittsfläche des Rohr-seitigen Manschettenendes $F_1$ beträgt, während die Behälterseitige Querschnittfläche der an das untere Ende des vertikalen Rohrstückes (13) angeschlossenen Manschette (12) $F_2$ und die Abschlussorgan-seitige Querschnittfläche der an das obere Ende des vertikalen Rohrstückes (13) angeschlossenen Manschette (15) $F_3$ beträgt und dadurch gekennzeichnet, dass

$$F_1 + F_2 = F_3.$$

3. Behälter nach Anspruch 2, dadurch gekennzeichnet, dass die Achse (13a) des vertikalen Rohrstückes (13), die Achse (6a) des Zuleitungsrohres (6) und die Vertikale (1d) durch den Behälterschwerpunkt in einer Ebene liegen und dass der Abstand (a) zwischen der Vertikalen (1d) und der Achse (6a) des Zuleitungsrohres gleich gross ist, wie der Abstand (b) zwischen der Vertikalen (1d) und der Achse (13a) des vertikalen Rohrstückes (13).

## Claims

1. Substantially closed container (1) intended to be placed on a weighing machine and including a pressure gas connection (13, 14), which opens into the interior of the container and serves for the feed of protective gas, wherein the orifice of the pressure gas connection is movably connected with the container wall to make a rigid connection possible between the pressure gas connection and the pressure gas mains, characterised thereby, that the pressure gas connection at its orifice displays a vertical tube member (13), into which the pressure gas feed duct (14) is rigidly inserted laterally, wherein both the tube ends are each connected by means of a respective flexible sleeve (12, 15) free of force transmission and directly with the container (1), and namely the lower tube end with the container lid (1c), into which it opens, und the upper tube end with a closure organ (16), which is rigidly connected with the container lid and closes off the cross-section of the sleeve.

2. Container according to claim 1, characterised thereby, that it is connected by way of a sleeve (8) with a closable material feed tube (6), wherein the cross-sectional area of the sleeve end at the tube side amounts, to $F_1$, while the cross-sectional area of the sleeve (12), which is connected to the lower end of the vertical tube member (13), at the container side amounts to $F_2$ and the cross-sectional area of the sleeve (15), which is connected to the upper end of the vertical tube member (13), at the closure organ side amounts to $F_3$ and that

$$F_1 + F_2 = F_3.$$

3. Container according to claim 2, characterised thereby, that the axis (13a) of the vertical tube member (13), the axis (6a) of the feed tube (6) and the perpendicular (1d) through the centre of gravity of the container lie in one plane and that the spacing (a) between the perpendicular (1d) and the axis (6a) of the feed tube are equally great as the spacing (b) between the perpendicular (1d) and the axis (13a) of the vertical tube member (13).

## Revendications

1. Récipient (1) essentiellement fermé, qui est destiné à être posé sur une balance et qui comporte un raccord à gaz sous pression (13, 14) débouchant à l'intérieur du récipient et servant à amener un gaz protecteur, le débouché du raccord à gaz sous pression étant relié avec possibilité de mouvement à la paroi du récipient pour permettre une liaison rigide entre le raccord à gaz sous pression (13, 14) et le réseau de gaz sous pression, caractérisé en ce que, à son débouché, le raccord à gaz sous pression comporte une pièce tubulaire verticale (13) à laquelle la canalisation d'amenée de gaz sous pression (14) est adaptée latéralement de façon rigide, les deux extrémités de la pièce tubulaire étant reliées directement au récipient (1) sans transmission de forces respectivement par des manchons souples (12, 15), et ceci de telle façon que l'extrémité inférieure de cette pièce soit reliée au couvercle (1c), dans lequel elle débouche, du récipient et l'extrémité supérieure à un organe d'obturation (16) qui obture la section transversale de son manchon et qui est relié rigidement au couvercle du récipient.

2. Récipient selon la revendication 1, caractérisé en ce qu'il est relié par l'intermédiaire d'un manchon (8) à un tube obturable d'arrivée de matière (6), la surface transversale de celle des extrémités de ce manchon qui est située du côté du tube étant égale à $F_1$ alors que la surface transversale, mesurée du côté du récipient, du manchon (12) raccordé à l'extrémité inférieure de la pièce tubulaire verticale (13) est égale à $F_2$ et que la surface transversale, mesurée du côté de l'organe d'obturation, du manchon (15) raccordé à l'extrémité supérieure de la pièce tubulaire verticale (13) est égale à $F_3$, et en ce que

$$F_1 + F_2 = F_3.$$

3. Récipient selon la revendication 2, caractérisé en ce que l'axe (13a) de la pièce tubulaire (13), l'axe (6a) du tube d'arrivée (6) et la verticale (1d) passant par le centre de gravité du récipient sont situés dans un même plan et en ce que la distance (a) entre la verticale (1d) et l'axe (6a) du tube d'arrivée est égale à la distance (b) entre la verticale (1d) et l'axe (13a) de la pièce tubulaire verticale (13).